# EUROPEAN PATENT SPECIFICATION

(11) **EP 2 287 641 B1**
(45) Date of publication and mention of the grant of the patent: **24.07.2013**
(21) Application number: 09252040.2
(22) Date of filing: 21.08.2009
(51) Int. Cl.: G02B 3/08, F21V 5/04

(54) **Fresnel lens sheet and luminaire using the same**
Fresnellinsenfolie und Leuchte damit
Feuille de lentille de Fresnel et luminaire l'utilisant

(43) Date of publication of application: 23.02.2011
(73) Proprietor: Mass Technology (H.K.) Ltd., Kowloon, Hong Kong (HK)
(72) Inventor: Foo, Onn Fah, Kowloon, Hong Kong (CN)
(74) Representative: Prentice, Raymond Roy

(56) References cited:
- WO-A-97/01115
- WO-A-99/09349
- FR-A- 832 532
- GB-A- 969 020
- US-A- 4 991 073
- US-A1- 2009 109 685

## Description

This invention relates generally to an improvement in a Fresnel lens utilized in the field of lighting fixtures, and more particularly, to a Fresnel lens sheet which is capable of concentrating a beam of light within a relatively small angle, and achieving highly efficient uniform lighting and more effective luminous flux, and to a luminaire using the Fresnel lens sheet as a light transmission piece.

Lamps having a combination of a light source and a Fresnel lens are commonly found in the art for gathering, focusing and directing light from the light source. The most common kind of the lamps is that the light source is disposed to face the Fresnel lens to allow the Fresnel lens to redirect the light emitting from the light source for the purpose of concentrating the light or spreading out the light.

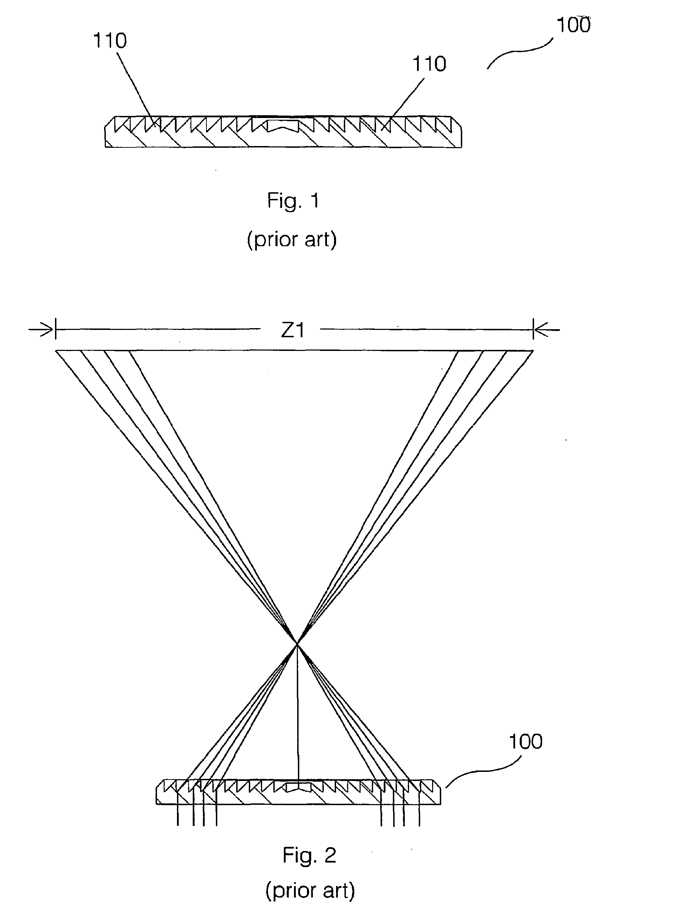

In applications requiring high intensity light, such as downlights and spotlights, a Fresnel lens sheet is very useful to concentrate light to a relatively small zone. The configuration of a conventional Fresnel lens sheet 100 utilized in a lamp as a light transmission piece is illustrated in Fig. 1. As illustrated, the Fresnel lens sheet 100 consists of a plurality of concentric rings of segmental lenses 110, and each of the segmental lenses 110 has a cross section of substantially triangular structure. The triangular structure is generally in a shape of a right triangle having a hypotenuse and an acute apex angle. Fig. 2 illustrates graphically illumination distribution produced by this conventional Fresnel lens sheet. A portion of the light emitting from the light source (not shown) is refracted to pass through the Fresnel lens sheet generally along the hypotenuses of the right triangles to define a lighting zone having a coverage Z1. As can be seen, the illumination is generally circularly-distributed and has less distribution in the central part of the zone coverage Z1.

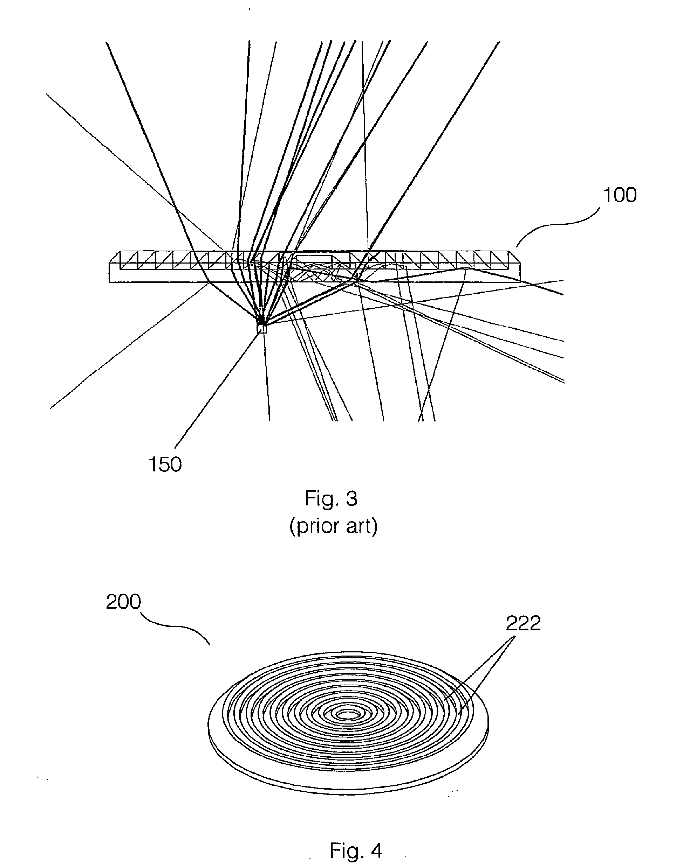

Fig. 3 clearly shows that another portion of the light emitting from the light source 150 is reflected back by a planar surface of the Fresnel lens sheet and cannot be refracted to pass through the Fresnel lens sheet, and a further portion of the light is reflected and then refracted to pass through the sheet. As illustrated, the light emitting from the light source 150 is directed to the Fresnel lens sheet 100 from various directions, and a large portion of the light is reflected to travel in the direction opposite the Fresnel lens sheet, with the result of loss of this portion of light. In this figure, the lines in bold represent the portion of the light which is refracted directly to pass through the Fresnel lens sheet. While the lines in thin represent the portion of the light which is first reflected and then refracted to pass through the Fresnel lens sheet, this portion of the light is less illuminous than the portion of the light which is refracted directly.

US Patent Specification No.200910109685 relates to a lighting apparatus and shows a Fresnel lens sheet having triangular structures with rounded corners. The lens unit comprises a central lens portion, and first and second side lens portions respectively disposed on two sides of the central lens portion. Each of the central lens portion and the first and second side lens portions is formed with a plurality of elongate triangular structures, each of the triangular structures has a cross-section in a shape of a right triangle that has a ratio of height to base width ranging from 0.2 to 2. The lens unit is configured to redirect the circularly-distributed illumination into the rectangularly-distributed illumination without the need of a rectangular reflector or a rectangular lens unit.

The triangular structures of the central lens portion and the first and second side lens portions can be alternatively shaped to have rounded corners or flattened tips.

Both the rounded corners and the flattened tips disclosed in US200910109685 are formed not to alter the rectangularly-distributed illumination. Thus they are related to the manufacturing issues and not to the technical effect of concentrating the light.

US Patent Specification No.4991073 refers to a lighting lens having a multiplicity of elongated lenticules wherein the cross sectional curve, outline curve, curvature, height and width of the base are defined in order to deliver light to narrow angular zones off angle from the lenticule axis. The lenticule apex is formed only by one curved portion. Lenticules with elongated axial cross sections may be formed as concentric rings, each ring having a section perpendicular to a supporting plate.

Although a single lenticule can deliver light within an indentified narrow zone, the whole structure composed of the lenticules formed in concentric rings (see Figure 12) is supposed to provide a desired light output pattern and it is not designed to concentrate light.

Therefore, there is a need for a Fresnel lens sheet utilized in a lamp for better concentrating a beam of light having a relatively small beam angle and for intensifying the illuminance in the central part of the illumination zone. There is also a need for a Fresnel lens sheet that is capable of reducing the loss of light energy during the process of reflection.

The present invention has been developed to fulfill the needs noted above and therefore has as a principle aim the provision of a Fresnel lens sheet utilized in a luminaire, which can concentrate a beam of light with a relatively small beam angle.

Another aim of the invention is to provide a Fresnel lens sheet utilized in a luminaire, which can reduce the loss of light energy during the process of reflection.

These and other aims and advantages of the invention are satisfied by providing a Fresnel lens sheet for use in a luminaire, as defined by claim 1.

In one preferred embodiment of the invention, the ratio ranges from 0.3 to 0,5, and the first and second curved portions are formed to have rounded configuration.

Another aspect of the invention is to provide a luminaire comprising:
a Fresnel lens sheet according to the invention;
a housing having an opening side, wherein the Fresnel lens sheet is disposed in the vicinity of the opening side; and
at least one light source disposed in the housing in a manner that the light source is facing the first surface of the Fresnel lens sheet to generate light toward to the Fresnel lens sheet, allowing passage of the light therethrough.

According to the invention, the luminaire can be used in many types of luminaries, such as incandescent lamps, fluorescent lamps, downlights, spotlights, automobile headlamps, traffic lights or decorative lights.

Preferably, the light source in the luminaire is a light emitting diode.

In contrast to the Fresnel lens sheet available in the prior art, the Fresnel lens sheet of the invention is configured to have a plurality of concentric convex prisms, each of the prisms having a cross-section of substantially triangular structure, and the triangular structure is characterized by an apex formed by joining a first curved portion and a second curved portion, and by a ratio of a radius of the second curved portion to a base width ranging from 0.1 to 0.5. It has been already found that within this range of the ratio, a beam of light that passes through the Fresnel lens sheet is concentrated to have a relatively small beam angle and a relatively centrally-distribution illumination. Also, the Fresnel lens sheet of the invention allows for redirecting a majority of the light to pass therethrough to reduce the loss of light energy.

To have a better understanding of the invention reference is made to the following detailed description of the invention and embodiments thereof in conjunction with the drawings in which:-
Figure 1 is a sectional view of a Fresnel lens sheet available in the prior art;
Figure 2 is a view showing schematics of light refraction of the Fresnel lens sheet of Fig. 1;
Figure 3 is a view showing the illumination pattern of the Fresnel lens sheet of Fig. 1;
Figure 4 is a perspective view of a Fresnel lens sheet constructed according to a preferred embodiment of the present invention;
Figure 5 is a top view of the Fresnel lens sheet of Fig. 4;
Figure 6 is a cross-sectional view taken along line A-A of Figure 4;
Figure 7 is an enlarged view of Section B of Fig. 6;
Figure 8 is a view showing schematics of light refraction of the Fresnel lens sheet of Fig. 4;
Fig. 9 is a view showing the illumination pattern of the Fresnel lens sheet of Fig. 4; and
Fig. 10 is a perspective view of an exemplary luminaire using the Fresnel lens sheet of the invention

In the various figures of the drawings, like reference numbers are used to designate like parts.

While this invention is illustrated and described in preferred embodiments, the Fresnel lens sheet may be produced in many different configurations, sizes, forms and materials.

Referring now to the drawings, Figs. 4 to 9 provide a Fresnel lens sheet 200 constructed consistent with a preferred embodiment of the present invention. In this embodiment, the Fresnel lens sheet 200 comprises a transparent sheet 210 and a Fresnel lens part 220. The Fresnel lens sheet 200 may be formed with a material selected from glass, plastics, polyolefins or organic glasses.

The transparent sheet 210 has a first surface 212 which is substantially planar, and a second surface 214 opposite the first surface 212. Preferably, the transparent sheet 210 has a height in the range from 1mm to 10mm.

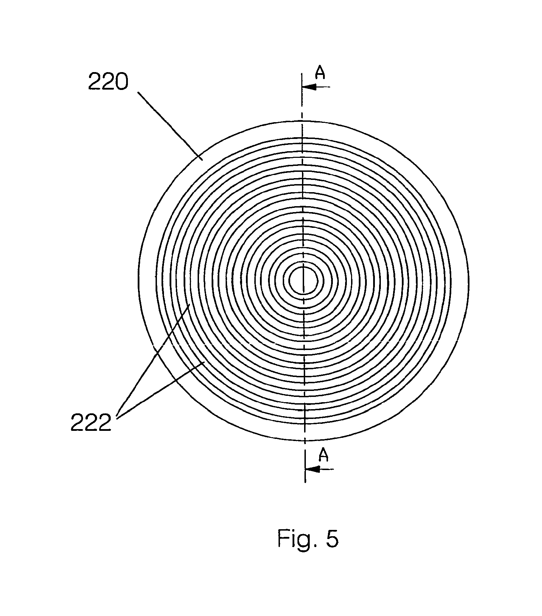

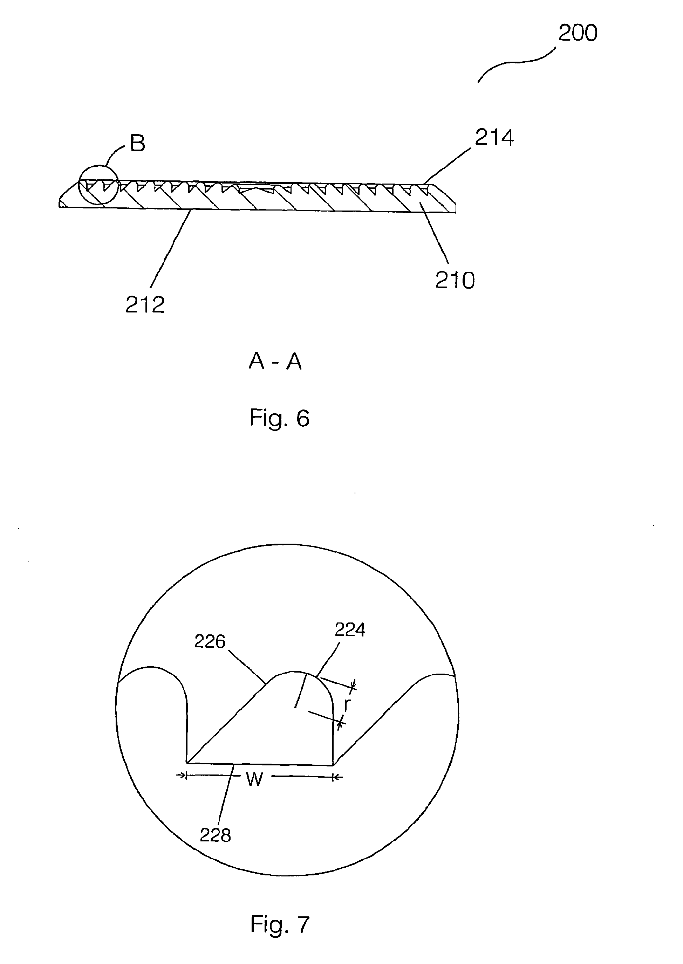

The Fresnel lens part 220 is formed on the second surface 214 of the transparent sheet 210. The Fresnel lens part 220 consists of a plurality of concentric convex prisms 222, as shown in Figs. 4 and 5. Fig. 6 illustrates that each of the convex prisms 222 has a cross-section of substantially triangular structure. This substantially triangular structure has a base 228 of width "w", a first rounded portion 226 and a second rounded portion 224, both of the two rounded portions 226, 224 are joined to define an apex of the substantially triangular structure. In particular, the substantially triangular structure is configured to have a ratio of a radius "r" of the second rounded portion 224 to the base width "w" ranging from 0.1 to 0.5, preferably ranging from 0.3 to 0.5, as shown in Fig. 7. It would be apparent to a person skilled in the art that the Fresnel lens sheet 200 may be made by thermo-molding a material selected from glass, plastics or polyolefins or through any methods known in the art, which will not be detailed herein.

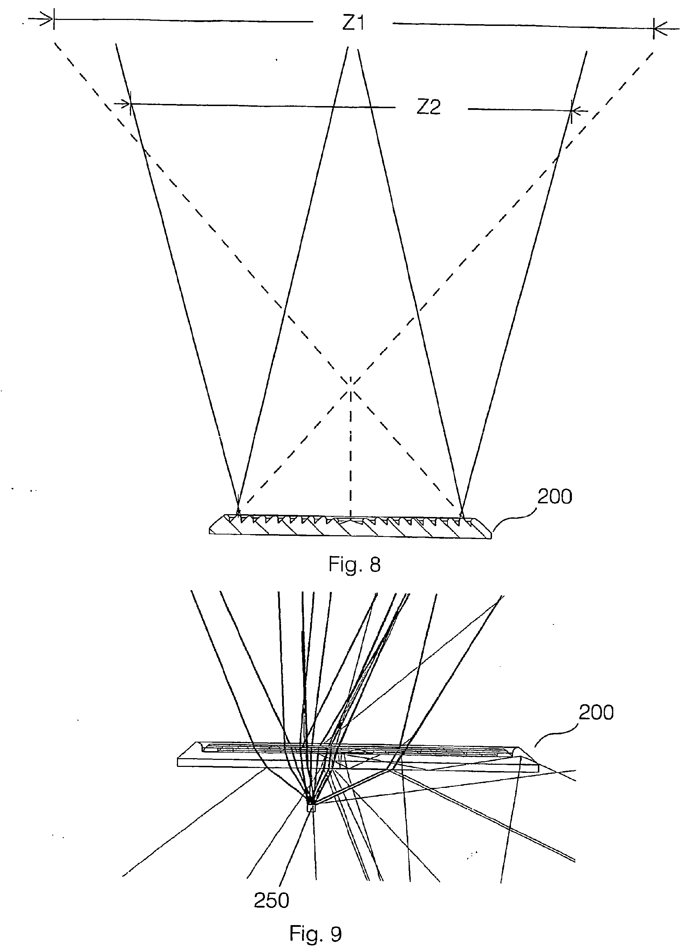

Fig. 8 illustrates a view showing schematics of light refraction of the Fresnel lens sheet 200. As illustrated, the beam of the light from the light source (not shown) is emitted within a small angle relative to the beam angle of the commonly available Fresnel lens sheet which is also shown in broken line in this figure. This narrow-angle light, which passes through the first planar surface 212 and the Fresnel lens part 220, tends to fall into a lighting zone having a coverage Z2 in which a relatively large portion of the light is distributed in the central part of the lighting zone coverage Z2.

Reference is now made to Fig. 9. This figure illustrates the illumination pattern of the Fresnel lens sheet 200 with the second rounded portion 224 having a radius of 0.75 mm when the base width is 2mm, namely, the ratio of the radius "r" to the base with "w" is 0.375. As illustrated, the light emitting from the light source 250 reaches the first planar surface 212 from various directions, with only a small portion of the light being reflected and exhausted during the process of reflection, and a very smaller portion of the light is first reflected and then refracted to pass through the Fresnel lens sheet 200 when compared to the illumination pattern as shown in Fig. 3, while a relatively large portion of the light is refracted directly to pass through the Fresnel lens sheet 200 to exit the sheet 200. As discussed above, this portion of the light in bold is more illuminous than the portion of the light in thin which is reflected and then refracted to exit the Fresnel lens sheet 200. Therefore, the overall light through the Fresnel lens sheet 200 has an improved light intensity and a higher luminous flux.

It has been found that the first rounded portion 226 of the Fresnel lens part 220 serves to intensify and concentrate the light emitting from the light source 250, and the second rounded portion 224 can narrow the angle of refraction down and further concentrate and redirect the light from the first rounded portion 226 such that the light, which exits from the second rounded portion 224, is inclined to be distributed centrally, producing the illumination pattern shown in Fig. 8. As a result, a uniform light intensity and a centrally-distributed illumination are possible.

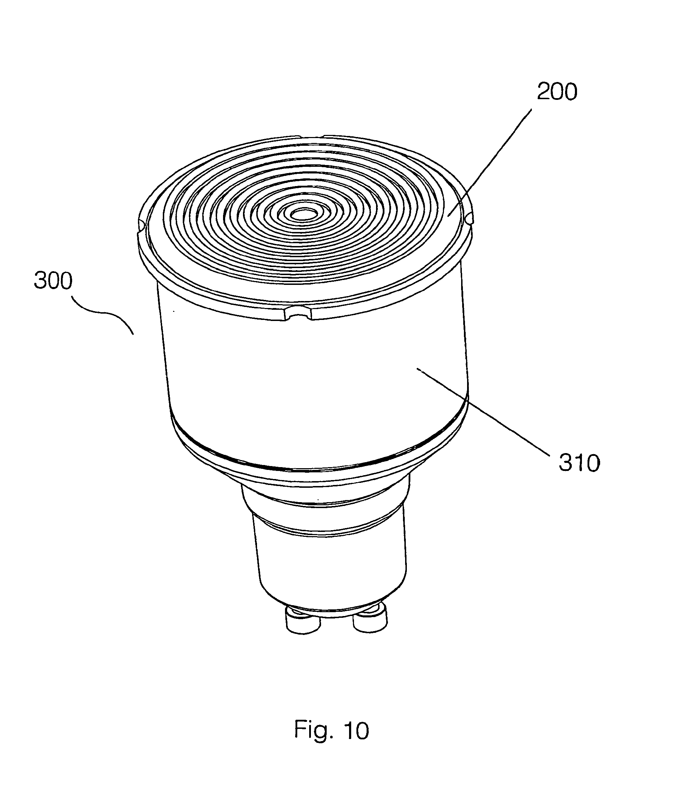

The invention also provides a luminaire 300 comprising the Fresnel lens sheet 200 described above. Fig. 10 illustrates a example of this luminaire 300. In particular, the luminaire 300 comprises the Fresnel lens sheet 200; a housing 310 having an opening side, wherein the Fresnel lens sheet 200 is disposed in the vicinity of the opening side; and at least one light source (not shown) disposed in the housing in a manner that the light source is facing the first surface of the Fresnel lens sheet to generate light toward to the Fresnel lens sheet, allowing passage of the light therethrough.

It would be understood that the luminaire of the invention may be any type of a lighting fixture, including but not limited to incandescent lamps, fluorescent lamps, downlights, spotlights, automobile headlamps, traffic lights and decorative lights. The light source can be a light emitting diode or any other types of light sources well known in the art.

### Example

A plurality of the Fresnel lens sheets constructed according to the invention were tested for their illumination characteristics. In these tests, the base width "w" is set to be 2mm, and the radius "r" of the second rounded portion of the Fresnel lens part is varied in the plurality of the Fresnel lens sheets.

The results obtained from these tests are given in the following table:-

**Table 1 Test results of illumination characteristics of Fresnel lens sheets of the invention**

| Type of Fresnel lens sheet | Beam angle | Maximum intensity | 180° cumulate luminous flux | 120° cumulate luminous flux | Ratio of 120° cumulate luminous flux to 180° cumulate luminous flux |
|---|---|---|---|---|---|
| Fresnel lens sheet without the second rounded portion | 95° | 112.26 cd | 263.19 lm | 210.81 lm | 0.801 |
| Fresnel lens sheet having the second rounded portion (r=0.5mm) | 93° | 118.99 cd | 270.79 lm | 224.81 lm | 0.830 |
| Fresnel lens sheet having the second rounded portion (r=0.6mm) | 89° | 142.22 cd | 276.52 lm | 234.56 lm | 0.848 |
| Fresnel lens sheet having the second rounded portion (r=0.75mm) | 87° | 151.29 cd | 277.69 lm | 240.74 lm | 0.867 |
| Fresnel lens sheet having the second rounded portion (r=0.8mm) | 90° | 135.14 cd | 285.72 lm | 242.3 lm | 0.848 |
| Fresnel lens sheet having the second rounded portion (r= 1.0mm) | 90° | 133.55 cd | 285.72 lm | 242.3 lm | 0.848 |

The results revealed that the Fresnel lens sheets of the invention have a light-focusing pattern and a relatively centrally-distributed illumination when compared with the Fresnel lens sheet available in the prior art, because a majority of the light from the light source is emitted through the Fresnel lens sheets of the invention within a small beam angle. Among these Fresnel lens sheets, the Fresnel lens sheet having the second rounded portion with r=0.75mm, namely, the ratio of the radius of the second rounded portion to the base width is 0.375, has produced the best light pattern.

The invention thus provides a Fresnel lens sheet for use in a luminaire which is able to concentrate and redirect the light from the light source so as to cast a substantially centrally-distributed illumination, with the result of improved light efficiency and higher light intensity. This is because the Fresnel lens sheet of the invention is designed to form a Fresnel lens part which has a rounded apex defined by first and second rounded portions with a ratio of a radius of the second rounded portion to the base width being 0.1 to 0.5.

While the embodiments described herein are intended as an exemplary Fresnel lens sheet, it will be appreciated by those skilled in the art that the present invention is not limited to the embodiments illustrated. Those skilled in the art will envision many other possible variations and modifications by means of the skilled person's common knowledge without departing from the scope of the invention, however, such variations and modifications should fall into the scope of this invention.

## Claims

1. A Fresnel lens sheet (200) for use in a luminaire, comprising:
a transparent sheet (210) having a flrst surface (212) on one side which is substantially planar, and a second surface (214) on the other side; and
a Fresnel lens part (220) containing a plurality of concentric convex prisms (222) formed on the second surface, each of the convex prisms having a cross-section of triangular structure, **characterized in that**
the triangular structure has a base and a rounded apex, the rounded apex formed by joining a first curved portion (226) and a second curved portion (224) and this triangular structure has a ratio of a radius (r) of the second curved portion (224) to a base width (W) ranging from 0.1 to 0.5.

2. The Fresnel lens sheet as claimed in claim 1, wherein the ratio ranges from 0,3 to 0.5.

3. The Fresnel lens sheet as claimed in claim 1 or 2, wherein the first and second curved portions (226, 224) are formed to have rounded configuration.

4. The Fresnel lens sheet as claimed in claim 1 or 2, wherein the Fresnel lens sheet is formed with a material selected from glass, plastic, polyolefin or organic glass.

5. A luminaire (300) comprising:
a Fresnel lens sheet (200) as claimed in any one of claims 1 to 4;
a housing (310) having an opening side, wherein the Fresnel lens sheet is disposed in the vicinity of the opening side; and in the housing (310) in a manner that the light source is
at least one light source disposed in the housing (310) in a manner that the light source is facing the first surface (212) of the Fresnel lens sheet to generate light toward to the Fresnel lens sheet (200) allowing passage of the light therethrough.

6. The luminaire as claimed in claim 5, wherein the luminaire is selected from the group consisting of incandescent lamps, fluorescent lamps, downlights, spotlights, automobile headlamps, traffic lights and decorative lights.

7. The luminaire as claimed in claim 5, wherein the light source is a light emitting diode.

## Patentansprüche

1. Fresnel- Linsen Scheibe (200) zum Gebrauch in einer Leuchte, umfassend:
eine transparente Scheibe (210) mit einer ersten Oberfläche (212), die im Wesentlichen eben ist, auf einer Seite und einer zweiten Oberfläche (214) auf der anderen Seite; und
einem Fresnel- Linsen Teil (220), der eine Vielzahl von konzentrischen konvexen Prismen (222) enthält, die auf der zweiten Oberfläche (214) ausgebildet sind, wobei jedes der konvexen Prismen (222) einen Querschnitt mit einer dreieckigen Struktur aufweist,
**dadurch gekennzeichnet, dass** die dreieckige Struktur eine Basis und einen bogenförmigen Scheitel aufweist, wobei der gerundete Scheitel durch Verbinden eines ersten bogenförmigen Teils (226) und eines zweiten bogenförmigen Teils (224) geformt ist, und dass diese dreieckige Struktur ein Verhältnis eines Radius (r) des zweiten bogenförmigen Teils (224) zu einer Weite (W) der Basis im Bereich von 0,1 bis 0,5 aufweist.

2. Fresnel- Linsen Scheibe (200) nach Anspruch 1, wobei das Verhältnis im Bereich von 0,3 bis 0,5 liegt.

3. Fresnel- Linsen Scheibe (200) nach Anspruch 1 oder 2, wobei der erste und der zweite bogenförmige Teil (226, 224) unter Ausbildung einer gerundeten Gestaltung geformt sind.

4. Fresnel- Linsen Scheibe (200) nach Anspruch 1 oder 2, wobei die Fresnel- Linsen Scheibe (200) aus Glas, Kunststoff, Polyolefin oder organischem Glas gebildet ist.

5. Leuchte (300), umfassend:
eine Fresnel- Linsen Scheibe (200) nach einem der Ansprüche 1 bis 4;
ein Gehäuse (310), das eine offenen Seite aufweist, wobei die Fresnel- Linsen Scheibe (200) in der Nähe der offenen Seite angeordnet ist; und
mindestens eine Lichtquelle, die in dem Gehäuse (310) derart angeordnet ist, dass die Lichtquelle der ersten Oberfläche (212) der Fresnel- Linsen Scheibe (200) zugewendet ist, um zu der Fresnel- Linsen Scheibe (200) gerichtetes Licht zu erzeugen und den Durchgang des Lichts durch diese zu erlauben.

6. Leuchte (300) nach Anspruch 5, wobei die Leuchte eine Glühlampe, eine Leuchtstofflampe, eine eingelassene Leuchte, eine Punktleuchte, ein Scheinwerfer für ein Kraftfahrzeug, eine Ampel oder eine dekorative Leuchte ist.

7. Leuchte (300) nach Anspruch 5, wobei die Lichtquelle eine Licht emittierende Diode ist.

## Revendications

1. Feuille (200) formant lentille de Fresnel à utiliser dans un luminaire et comprenant :
une feuille (210) transparente ayant une première surface (212) d'un côté, qui est sensiblement plane et une deuxième surface (214) de l'autre côté et
une partie (220) formant une lentille de Fresnel et contenant une pluralité de prismes (222) convexes concentriques formée sur la deuxième surface, chacun des prismes convexes ayant une section transversale de structure triangulaire, **caractérisée en ce que**
la structure triangulaire a une base et un sommet arrondi, le sommet arrondi étant formé en joignant une première partie (226) incurvée et une deuxième partie (224) incurvée et cette structure triangulaire a un rapport d'un rayon (r) de la deuxième partie (224) incurvée à une largeur (W) de la base allant de 0,1 à 0,5.

2. Feuille formant lentille de Fresnel suivant la revendication 1,
dans laquelle le rapport va de 0,3 à 0,5.

3. Feuille formant lentille de Fresnel suivant l'une des revendications 1 ou 2,
dans laquelle les première et deuxième parties (226, 224) incurvées sont formées de manière à avoir une configuration arrondie.

4. Feuille formant lentille de Fresnel suivant l'une des revendications 1 ou 2,
dans laquelle la feuille formant lentille de Fresnel est en un matériau choisi parmi du verre, une matière plastique, une polyoléfine ou du verre organique.

5. Luminaire (300) comprenant :
une feuille (200) formant lentille de Fresnel tel que revendiquée suivant l'une quelconque des revendications 1 à 4 ;
un boîtier (310) ayant un côté d'ouverture, la feuille formant lentille de Fresnel étant disposée à proximité du côté d'ouverture ; et
au moins une source lumineuse disposée dans le boîtier (310) de manière à ce que la source lumineuse fasse face à la première surface (212) de la feuille formant lentille de Fresnel pour produire de la lumière en direction de la feuille (200) formant lentille de Fresnel en permettant à de la lumière d'y passer.

6. Luminaire suivant la revendication 5,
dans lequel le luminaire est choisi dans le groupe consistant en des lampes à incandescence, des lampes fluorescentes, des luminaires à répartition intensive, des spots, des lampes de phare de véhicule, des feux de signalisation et des éclairages décoratifs.

7. Luminaire suivant la revendication 5,
dans lequel la source lumineuse est une diode électroluminescente.
